# EUROPÄISCHE PATENTSCHRIFT

(11) **EP 0 668 140 B1**
(45) Veröffentlichungstag und Bekanntmachung des Hinweises auf die Patenterteilung: **26.04.2000**
(21) Anmeldenummer: 95101540.3
(22) Anmeldetag: 06.02.1995
(51) Int. Cl.: B29C 45/17

(54) **Verfahren zur Herstellung von Zahnbürsten**
Method of manufacturing toothbrushes
Procédé pour fabriquer des brosses à dents

(30) Priorität: 15.02.1994 DE 4404672
(43) Veröffentlichungstag der Anmeldung: 23.08.1995
(73) Patentinhaber: M + C SCHIFFER GmbH, D-53577 Neustadt (DE)
(72) Erfinder: Lanvers, Andreas Dr.-Ing., D-53604 Bad Honnef (DE)
(74) Vertreter: Grünecker, Kinkeldey, Stockmair & Schwanhäusser Anwaltssozietät

(56) Entgegenhaltungen:
- EP-A- 0 363 948
- EP-A- 0 485 726
- DE-A- 3 936 289
- DE-A- 4 020 417
- DE-A- 4 231 270
- FR-A- 1 605 509
- US-A- 4 247 515
- US-A- 5 254 306
- PATENT ABSTRACTS OF JAPAN vol. 8 no. 104 (M-296) [1541] ,16.Mai 1984 & JP-A-59 016728 (KISHIMOTO SANGYO)
- MACHINE DESIGN, Bd. 54, Nr. 28, 9.Dezember 1982 CLEVELAND US, Seiten 99-102, DREGER 'The best of two worlds in plastics processing'

## Beschreibung

Die Erfindung bezieht sich auf ein Verfahren zur Herstellung von verhältnismäßig dickwandigen Formteilen, beispielsweise Zahnbürsten, aus thermoplastischem Kunststoff, bei dem der geschmolzene Kunststoff über mindestens eine durch eine Nadel verschließbare Heißkanaldüse in mindestens einen Formhohlraum eingespritzt wird.

Massenartikel, wie z.B. Zahnbürsten, werden zweckmäßigerweise im Spritzgußverfahren hergestellt, wobei der heiße Kunststoff über sogenante Heißkanaldüsen in den Formhohlraum eingespritzt wird. Die Verwendung von Heißkanaldüsen bzw. Heißkanalsystemen hat gegenüber konventionellen Anspritzarten, wie z.B. Stangenangüssen, Verteilerspinnen etc., den Vorteil, daß keine Angußabfälle entstehen, die wieder entsorgt werden müssen. Diese Art der Anspritzung ist also besonders material- und energieeinsparend und damit zukunftsweisend.

Neben offenen Heißkanalsystemen, die keine Verschlußmöglichkeiten aufweisen, werden heute in zunehmendem Maße verschließbare Heißkanalsysteme angeboten und industriell eingesetzt. Hierbei handelt es sich in der Regel um sogenannte Nadelverschlußsysteme. Beispielsweise Zahnbürsten, werden hiermit in der Weise hergestellt, daß die in der Nullage formbündig stehende Verschlußnadel bei Einspritzbeginn zurückgezogen wird und der thermoplastische Kunststoff in den der Form der Zahnbürste entsprechenden Formhohlraum eingespritzt wird. Nach vollständiger Ausformung der Zahnbürste wird die Verschlußnadel dann wieder in Nullage gebracht. In dieser Lage schließt sie den Formhohlraum bündig ab und sorgt dadurch für einen optisch kaum noch sichtbaren Anspritzpunkt. Dabei ist es möglich, entweder im Bereich des Bürstenkopfes Sacklöcher vorzusehen, in die dann später die Borstenbündel eingestopft und mittels eines Ankers gesichert werden. Eine andere Möglichkeit der Beborstung besteht darin, fertige, an ihren Befestigungsenden angeschmolzene Borstenbündel in das Formwerkzeug einzubringen, die mit ihren Befestigungsenden in den Formhohlraum ragen und die dann beim Spritzgießen des Zahnbürstenkörpers vom thermoplastischen Kunststoff umschlossen werden. Um eine gut handhabbare Zahnbürste zu erhalten, weist die Größe des Zahnbürstengriffes einen verhältnismäßig großen Querschnitt auf, der einerseits verhältnismäßig lange Kühlzeiten mit sich bringt, was sich auf die Zykluszeit einer diesbezüglichen Spritzvorrichtung nachteilig auswirkt. Andererseits kann es bei großen Querschnitten, insbesondere im Griffbereich einer Zahnbürste, zu Einfallstellen kommen, die die Zahnbürste entweder unbrauchbar machen oder deren Qualität vermindern. Schließlich ist auch zu berücksichtigen, daß für den Griffbereich einer Zahnbürste verhältnismäßig viel wertvoller Werkstoff und damit Rohstoff benötigt wird.

Es ist zwar bekannt, den relativ dickwandigen Griffbereich durch geeignete Werkzeugseinsätze durch eine biegesteife Rippenkonstruktion zu ersetzen. Nachteilig wirken sich hierbei allerdings "tote Ecken" aus, die zu einer Schmutzansammlung in diesen Bereichen führen und möglicherweise Bakterien- oder Pilzbefall hervorrufen.

Aus der gattungsbildenden JP-A-59016728 ist ein Verfahren bekannt, bei dem ein thermoplastischer Kunststoff in einen Formhohlraum eingespritzt wird, um diesen teilweise zu füllen. Danach wird eine Nadel in Richtung auf den Formhohlraum abgesenkt, durch die ein Anguß einer Heißkanaldüse gasdicht verschlossen wird. In dieser abgesenkten Lage liegt die Stirnseite der Nadel auf einer Höhe mit der Stirnseite des Angusses, wobei beide Teile in das Formnest hineinragen. In diesem Zustand wird Gas durch die Nadel in den Formhohlraum eingeblasen, um die Fließfront des in dem Formnest befindlichen Kunststoffs weiter voranzutreiben, an die Wände des Formhohlraumes anzulegen und in dem Formteil einen Hohlraum auszubilden. Danach wird der derart in dem Formteil hergestellte Hohlraum durch die Nadel entgast. Die Nadel wird dann zurückgezogen, um den Anguß freizugeben und eine die Eingußöffnung verschließende Menge nachzuspritzen. Danach wird das Werkstück entformt. Dieses vorbekannte Verfahren eignet sich nicht zur Herstellung von Formteilen mit einer vollständig glatten Oberfläche. Vielmehr bleibt der Anguß an dem Formteil deutlich sichtbar.

Aus der US-A-4 247 515 ist ein Verfahren bekannt, bei dem ein thermoplastischer Kunststoff in einen Formhohlraum eingespritzt wird. Danach wird eine die Düse auf ihrer gesamten Länge vollkommen ausfüllende Nadel so weit auf den Formhohlraum zugestellt, daß deren Stirnseite in der Nähe oder innerhalb des Formhohlraumes angeordnet ist. Ein Fluid wird durch die Nadel in den Formhohlraum eingespritzt, so daß die zunächst den Formhohlraum teilweise ausfüllende Menge an thermoplastischem Kunststoff sich vollständig an die Wandung des Formhohlraumes anlegt. Nach Erstarren des thermoplastischen Kunststoffes in den Formhohlraum wird die Nadel aus diesem herausgezogen, um ein Entgasen des Fluides zu ermöglichen. Auch das aus dieser Druckschrift vorbekannte Verfahren eignet sich nicht zur Herstellung von Formteilen mit einer guten Oberflächenqualität. Darüber hinaus weist die vorbekannte Vorrichtung keine Heißkanaldüse auf und somit nicht geeignet, Formteile mit hoher Ausstoßrate herzustellen. Weiterhin nachteilig bei dieser vorbekannten Vorrichtung ist es, daß ein erheblicher, in der Düse befindlicher Anteil thermoplastischen Kunststoffes erst durch Vorschieben der Nadel in den Formhohlraum gefördert wird, so daß die Formfüllung in zwei Teilabschnitte unterteilt ist, was sich nicht nur nachteilig auf die Qualität des Formteiles, sondern auch auf die Zykluszeit auswirkt. Die aus der US-A-4 247 515 bekannte Vorrichtung eignet sich somit nicht zur Herstellung von Formteilen bei hoher Ausstoßrate.

Der Artikel in MACHINE DESIGN Bd 54, Nr. 28, 09.12.82, Cleveland, US, Seiten 99 bis 102, Dreger "The best of two worlds in plastic processing" offenbart ein Verfahren, bei dem eine den Formhohlraum nur teilweise ausfüllende Menge an thermoplastischen Kunststoff in den Formhohlraum eingespritzt wird. Danach wird eine die Heißkanaldüse verschließende Nadel auf den Formhohlraum zugestellt, um den Anguß der Heißkanaldüse ganz zu verschließen. In dieser abgesenkten Lage liegt die Stirnseite der Nadel auf einer Höhe mit der Stirnseite des Angusses. Danach wird ein Gas durch die Nadel in den Formhohlraum eingeblasen, um die Fließfront des in dem Formhohlraum befindlichen Kunststoffes weiter voranzutreiben und an die Wandungen des Formhohlraumes anzulegen. Nach Erstarren des thermoplastischen Kunststoffes wird das einen sichtbaren Anguß aufweisende Formteil entfernt. Auch das aus diesem Stand der Technik vorbekannte Verfahren und die entsprechende Vorrichtung eignen sich somit nicht zur Herstellung von Formteilen mit guter Oberflächenqualität, also beispielsweise zur Herstellung von Zahnbürsten.

Der Erfindung liegt die Aufgabe zugrunde, daß aus der JP-A-59016728 vorbekannte Verfahren derart weiterzubilden, daß mit dem Verfahren ein Formteil mit hoher Oberflächenqualität hergestellt werden kann.

Zur Lösung dieser Aufgabe wird mit der vorliegenden Erfindung ein Verfahren mit den Merkmalen von Anspruch 1 vorgeschlagen. Bevorzugte Ausgestaltungen des erfindungsgemäßen Verfahrens sind in den abhängigen Ansprüchen 2 bis 4 angegeben.

Durch das erfindungsgemäße Verfahren wird im Formteil, beispielsweise im Griff der Zahnbürste, ein Hohlraum erzeugt, durch den der Bedarf an wertvollem Kunststoff erheblich reduziert werden kann. Durch diesen Hohlraum verringert sich die Wandstärke des Formteiles, so daß die Abkühlung erheblich rascher als bisher erfolgen kann. Dadurch reduziert sich die Zykluszeit einer Spritzgießvorrichtung erheblich. Die Entstehung von Einfallstellen in den Formteilen, insbesondere im Griff der Zahnbürsten, ist weitgehend ausgeschlossen.

Es ist zwar bekannt, über die Maschinendüse ein Gas in herzustellende Formteile aus Kunststoff einzuleiten. Dabei wird das Gas, wie der Kunststoff, zentral von einem Punkt und einen Stangenanguß in die zu begasenden Kavitäten geleitet. Durch den Angußverteiler entsteht nicht nur Abfall, sondern auch ein unsauberer Anschnittpunkt, der nachgearbeitet werden muß. Die Vielzahl der Kavitäten führt zu Problemen bei der Balancierung, da die Eingasung ein instabiler Fließprozeß ist, der höchst sensibel auf Fließwiderstandsunterschiede reagiert und damit zu einer ungleichmäßigen Gasblasenverteilung führt.

Es ist ebenfalls bekannt, ein Gas über eine Werkzeugdüse den Kavitäten zuzuführen. Hier wird das Gas gezielt in den dickwandigen Bereich der Formteile oder des Angußbereiches eingeleitet, während die Kunststoffmasse an einer anderen Stelle zugeführt wird. Bei diesem Verfahren ist eine Versiegelung des Angußes nicht möglich, was durch das vorhandene Loch nicht nur eine unschöne Markierung hinterläßt, die bei Zahnbürsten nicht akzeptiert wird, sondern auch die Gefahr von Bakterienbefall und Pilzwachstum mit sich bringt.

Bevorzugte Weiterbildungen des erfindungsgemäßen Verfahrens sind in den Ansprüchen 2 - 4 offenbart.

Die Erfindung wird nachfolgend anhand eines in einer Zeichnung in stark vereinfachter Weise dargestellten Ausführungsbeispieles näher erläutert. Dabei zeigen
- Fign. 1 bis 5: die aufeinanderfolgenden Verfahrensschritte bei der Herstellung einer Zahnbürste nach dem Verfahren gemäß der Erfindung und
- Fign. 6 bis 8: weitere Ausgestaltungen einer Nadel.

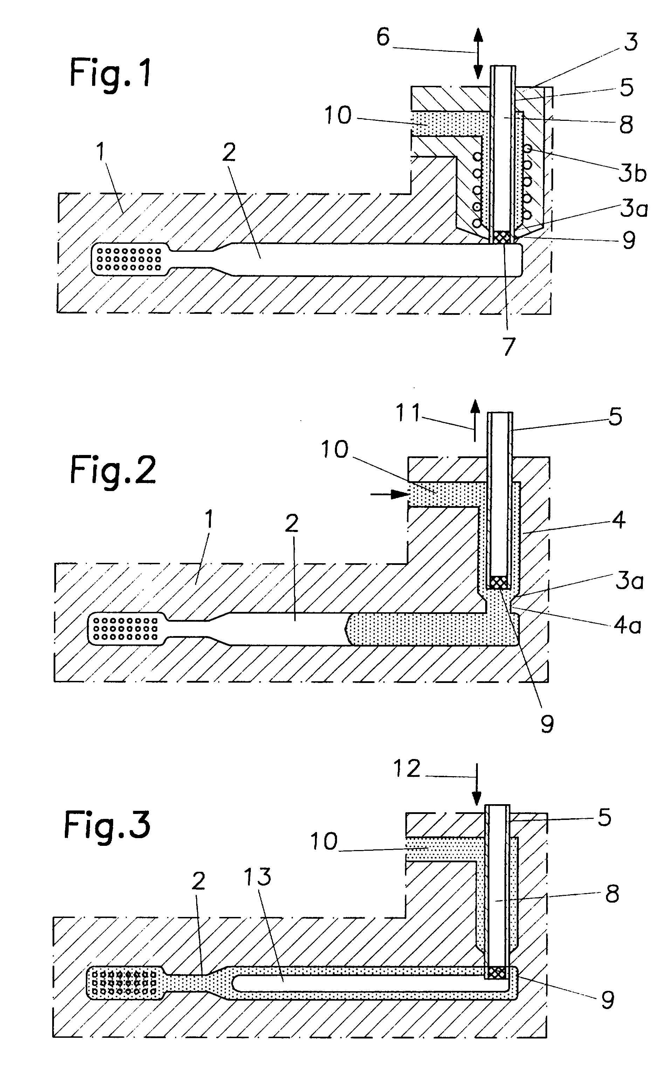

In den Fign. 1 bis 5 der Zeichnung ist jeweils ein Formwerkzeug 1 gezeigt, welches in an sich bekannter, nicht dargestellter Weise geteilt ausgebildet ist und einen Formhohlraum 2 besitzt, der dem eigentlichen Körper einer Zahnbürste entspricht. Bedarfsweise sind mehrere derartige Formhohlräume 2 im Formwerkzeug 1 vorgesehen.

In dem Formhohlraum 2 mündet nahe dem Ende des zu bildenden Griffes der Zahnbürste eine Heißkanaldüse 3a eines nur angedeuteten und thermisch vom Formwerkzeug 1 getrennten Heißkanalverteilers 3 mit einer ebenfalls nur angedeuteten Heizung 3b, wobei der Einfachheit halber der Heißkanalverteiler 3 und die Heizung 3b in den Darstellungen der Figuren 2 bis 5 nicht mehr eingezeichnet sind. Die Heißkanaldüse 3a besteht aus einem abgestuften Kanal 4, in dem eine Nadel 5 in Richtung eines Doppelpfeiles 6 verschiebbar angeordnet ist. Der abgestufte Kanal 4 ist nun so angeordnet und ausgebildet, daß dessen kleinerer Querschnitt 4a in den Formhohlraum 2 übergeht und durch die Nadel 5 geschlossen werden kann, wie dies in Fig. 1 deutlich zu sehen ist.

Die dem Formhohlraum 2 zugewandte Stirnfläche 7 der Nadel 5 weist nun eine Kontur auf, die genau der Kontur des Formhohlraumes 2 und damit der Kontur des zu bildenden Griffteiles der Zahnbürste angepaßt ist. Im dargestellten Ausführungsbeispiel ist die Nadel 5 als Hülse ausgebildet, in der sich ein Gasströmungskanal 8 befindet. In den Fign. 1 bis 5 ist der Gasströmungskanal 8 an seinem dem Formhohlraum 2 zugewandten Ende durch einen Einsatz 9 verschlossen, der gasdurchlässig ausgebildet ist und beispielsweise aus Sintermetall besteht. Diese Ausgestaltung der Nadel 5 stellt sicher, daß über den Gasströmungskanal 8 nur ein Gas, beispielsweise ein Inertgas, in den Formhohlraum 2 eingeleitet und wieder abgezogen werden kann. Die Ausgestaltung des Einsatzes 9 verhindert, daß thermoplastischer Kunststoff in den Gasströmungskanal 9 eindringen und denselben verstopfen kann.

Der abgestufte Kanal 4 ist mit einem seitlichen Kanal 10 verbunden, der ebenfalls im Heißkanalverteiler 3 ausgebildet ist und von der Maschinendüse einer Spritzgußmaschine oder dergleichen mit geschmolzenem Kunststoff, der zur Bildung des Körpers der Zahnbürste dient, gefüllt wird. Für die Erläuterung der Arbeitsweise der vorbeschriebenen Vorrichtung wird nun davon ausgegangen, daß der Kanal 10 und der abgestufte Kanal 4 bereits vollständig und weitgehend drucklos mit gescholzenem, thermoplastischem Kunststoff gefüllt sind, wie dies die Fig. 1 deutlich erkennen läßt. Der Formhohlraum 2 gemäß der Figur 1 ist noch leer.

Jetzt wird die Nadel 5 in Richtung des Pfeiles 11 gemäß Fig. 2 bewegt, so daß der engere Bereich 4a des abgestuften Kanales 4 und damit die Öffnung der Heißkanaldüse 3a freigegeben wird. Jetzt kann über die Kanäle 10 und 4 geschmolzener Kunststoff unter Druck in den Formhohlraum 2 einströmen, wie dies in der Fig. 2 gezeigt ist. Sobald sich eine vorgegebene, den Formhohlraum 2 nur teilweise ausfüllende Menge des geschmolzenen Kunststoffes im Formhohlraum 2 (Fig. 2) befindet, wird die Nadel 5 entsprechend des Pfeiles 12 in ihre Lage gemäß Fig. 3 bewegt. In dieser Lage schließt die Nadel 5 nicht nur die Heißkanaldüse 3a ab, sondern ragt noch um einen vorgegebenen Betrag in den Formhohlraum 2 und damit in den im Formhohlraum 2 befindlichen, geschmolzenen Kunststoff.

Jetzt wird über den Strömungskanal 8 der Nadel 5 ein unter Druck stehendes Gas, beispielsweise ein Inertgas, in den im Formhohlraum 2 befindlichen Kunststoff eingeleitet. Dieses eingeleitete Gas treibt die sogenannte Fließfront des zuvor eingefüllten Kunststoffes weiter voran und formt in der Kunststoffseele einen Hohlraum 13 aus, wie dies in der Fig. 3 sehr deutlich zu erkennen ist. Die Außenkontur des Formteils wird dabei vollständig ausgeformt, indem die Kunststoffschmelze mittels des Gasinnendruckes im Hohlraum 13 gegen den Formhohlraum gepreßt wird, wobei in diesem Fall der Körper einer Zahnbürste geformt wird. Sobald das Formteil vollständig ausgeformt ist, kann der Gasdruck noch so lange erhalten bleiben, bis eine ausreichende Dimensionsstabilität des Formteiles infolge der Kühleinwirkung des Formwerkzeuges 1 erreicht ist. Anschließend ist es vorteilhaft, das eingepreßte Gas wieder über den Gasströmungskanal 8 abzuziehen, bis der Hohlraum 13 wieder weitgehend drucklos ist. Dabei kann das zurückgewonnene Gas gegebenenfalls wieder für das nächste Formteil mitverwendet werden.

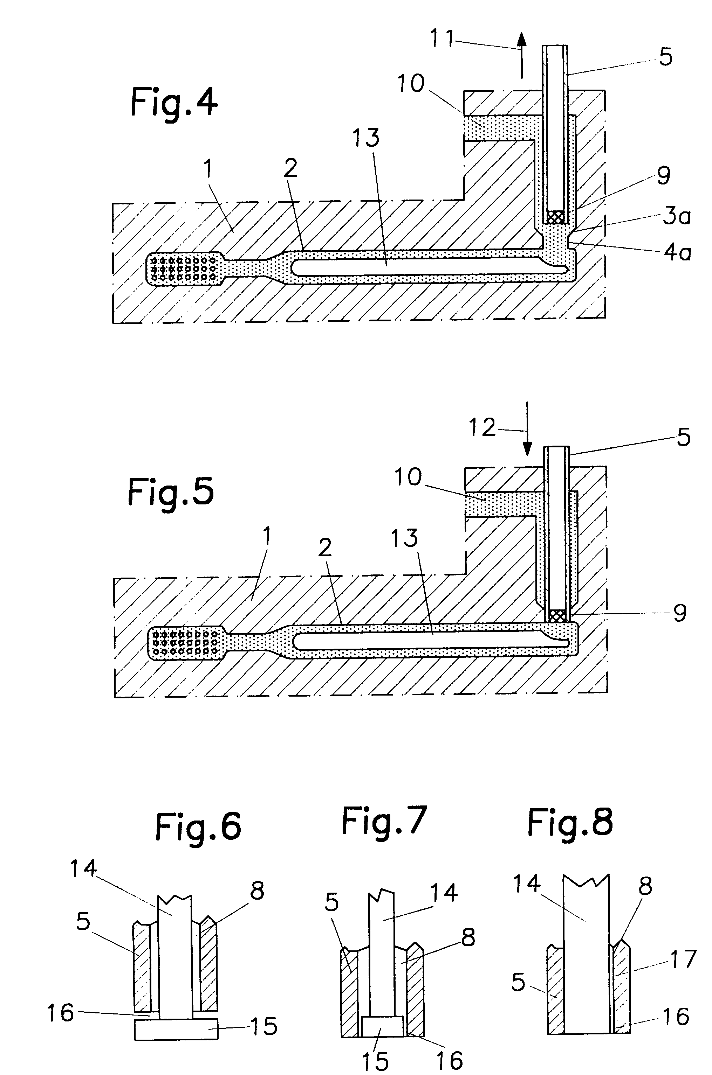

Sobald sich kein nennenswerter Überdruck mehr im Hohlraum 13 befindet, wird die Nadel 5 wieder gemäß dem Pfeil 11 bewegt und damit erneut die Heißkanaldüse 3a freigegeben, wie dies in Fig. 4 dargestellt ist. Diese Freigabe der Heißkanaldüse 3a erfolgt nur über einen sehr kurzen Zeitraum. In dieser geöffneten Stellung der Nadel 5 strömt nun noch eine geringe Menge des geschmolzenen Kunststoffes in den Formhohlraum 2 ein, so daß die aus dem Begasungsvorgang resultierende Formteilöffnung wieder mit Kunststoff ausgefüllt wird. Dies stellt eine sogenannte Angußversiegelung dar. Anschließend wird die Nadel 5 entsprechend dem Pfeil 12 (Fig. 5) wieder in ihre Ausgangslage gemäß Fig. 1 gebracht, in der sie den Formhohlraum 2 und damit das gebildete Formteil bündig abschließt.

Nach einer sogenannten Restkühlung kann dann das fertige Formteil entformt bzw. entnommen werden. Danach wiederholt sich der soeben beschriebene Vorgang erneut.

In den Fign. 6 bis 8 der Zeichnung sind nun weitere Ausgestaltungen der Nadel 5 gezeigt, die hier im Gasströmungskanal 8 jedoch keinen Einsatz 9 mehr besitzt. Gemäß der Fig. 6 des Ausführungsbeispieles ist in der Nadel 5 ein Stößel 14 vorgesehen, der an seinem freien, dem Ende der Nadel 5 zugewandten Ende einen tellerartigen Verschlußkörper 15 trägt. Durch entsprechende axiale Verschiebung des Stößels 14 kann am Ende der Nadel 5 kurzzeitig ein kleiner, seitlicher Ausspritzspalt 16 freigegeben werden, über den dann das Gas aus dem Gasströmungskanal 8 in die eingespritzte Kunststoffmasse eingepreßt werden kann.

Bei dem Ausführungsbeispiel der Fig. 7 ist ebenfalls in dem Gasströmungskanal 8 ein axial verschiebbarer Stößel 14 vorgesehen, der auch einen tellerartigen Körper 15 trägt. Dieser Körper 15 verschließt jedoch die Austrittsöffnung des Gasströmungskanales 8 der Nadel 5 nicht vollständig. Hier ist zwischen der Mantelfläche des Körpers 8 und der Innenwandung der Nadel 5 ein äußerst schmaler Spalt 16 vorhanden, über den das in den eingefüllten Kunststoff einzuleitende Gas ausströmen kann. Die Breite dieses Spaltes ist dabei so bemessen, daß zwar ein Gas aus- und eintreten kann, jedoch kein Kunststoff in den Gasströmungskanal 8 gelangt. Dabei ist die Breite des Aus- bzw. Durchtrittsspaltes 16 von dem Fließ- und Erstarrungsverhalten des eingesetzten Kunststoffes sowie von den Temperatur- und Druckverhältnissen an der Spitze der Nadel 5 abhängig.

Bei dem Ausführungsbeispiel der Fig. 8 ist im Gasströmungskanal 8 der Nadel 5 ebenfalls ein Stößel 14 vorgesehen, der jedoch an seinem freien Ende keinerlei Verschlußkörper 15 besitzt. Der Stößel 14 besitzt hier zunächst einen solchen Durchmesser, der demjenigen des Strömungskanales 8 entspricht. Sodann ist der Stößel 14 mit mindestens einer senkrecht zur Zeichnung verlaufenden Abflachung 17 versehen, durch die ebenfalls ein Austrittsspalt 16 in der Nadel 5 gebildet ist. Auch hier ist darauf zu achten, daß die geometrischen Verhältnisse vom Gasströmungskanal 8 und Stößel 14 so gewählt werden, daß zwar ein unter Druck stehendes Gas aus- und gegebenenfalls wieder einströmen kann, daß jedoch das Eindringen von Kunststoff in den Gasströmungskanal 8 ausgeschlossen ist.

Es ist möglich, statt der Einleitung des Gases einen minderwertigen, gegebenenfalls gefärbten Kunststoff, eine Flüssigkeit oder dergleichen in den Hohlraum zu leiten. Auch andere Bürsten können in dieser Weise gefertigt werden.

## Patentansprüche

1. Verfahren zur Herstellung von verhältnismäßig dickwandigen Formteilen aus thermoplastischem Kunststoff, bei dem der geschmolzene Kunststoff über mindestens eine durch eine Nadel verschließbare Heißkanaldüse in mindestens einen Formhohlraum eingespritzt wird, wobei sofort nach der Einspritzung einer vorgegebenen, den Formhohlraum nur teilweise füllenden Menge an geschmolzenem Kunststoff die Nadel unter Absperrung der HeißkanalDüse in Richtung auf den Formhohlraum zugestellt wird und über dieselbe ein den Kunststoff an die Wandung des Formhohlraumes anpressendes Gas, eine Flüssigkeit oder auch ein anderer Kunststoff in den bereits eingespritzten Kunststoff eingeleitet wird, danach die Heißkanaldüse kurzzeitig geöffnet und noch eine geringe, die Eingußöffnung verschließende Menge des ersten Kunststoffes nachgespritzt wird,
**dadurch gekennzeichnet,**
daß die Nadel beim Zustellen auf den Formhohlraum in den bereits im Formhohlraum befindlichen, aber noch nicht erhärteten Kunststoff eingedrückt wird und nach dem Nachspritzen der die Eingußöffnung verschließenden Menge des ersten Kunststoffs schließlich die Nadel in eine Nulllage gebracht wird, so daß durch diese der Formhohlraum bündig abgeschlossen wird.

2. Verfahren nach Anspruch 1,
dadurch gekennzeichnet,
daß in dem bereits eingespritzten Kunststoff ein minderwertiger Kunststoff, beispielsweise Recyclingkunststoff oder Kunststoffschaum, eingeleitet wird.

3. Verfahren nach Anspruch 1,
dadurch gekennzeichnet,
daß in den eingespritzten Kunststoff eine niedrigsiedende Flüssigkeit eingeleitet wird.

4. Vorrichtung nach Anspruch 1,
dadurch gekennzeichnet,
daß nach der Formfüllung das Gas über die Nadel wieder abgezogen wird.

## Claims

1. A method of manufacturing of articles having relatively thick walls from a molten thermoplastic material, said method comprising the steps of:
injecting the molten thermoplastic material through at least one hot runner, closable by at least one needle, into at least cavity,
displacing the needle towards the cavity thereby closing the hot runner, immediately after injecting a predetermined amount of molten thermoplastic, just partially filling the cavity, and introducing therethrough one of gas, liquid and other plastic material, into the plastic material which has already been injected for pressing the same against the walls of the cavity,
thereafter, momentarily opening the hot runner and injecting a small amount of the first molten plastic material for blocking the opening of the hot runner
**characterized in that**
during displacement towards the cavity said needle is impressed into the plastic material, which is arranged in the cavity but which has not yet solidified and
that after injecting the first molten material for blocking the opening the needle is brought into a first position so that the needle closes the cavity with flush surface.

2. A method as set forth in claim 1, wherein a poor-grade plastic, for example molten recycled plastic material or molten plastic foam is introduced into the already injected plastic.

3. A method as set forth in claim 1, wherein a low-boiling liquid is introduced into the injected plastic.

4. A method as set forth in claim 1, wherein said said method further comprising the step of drawing off, after the article has been formed, the injected gas through the pin.

## Revendications

1. Procédé pour fabriquer des pièces profilées à paroi relativement épaisse en matière thermoplastique, selon lequel on injecte la matière plastique fondue dans au moins une cavité de moule par l'intermédiaire d'au moins un injecteur à canal chauffant apte à être fermé par une aiguille, puis immédiatement après l'injection d'une quantité prédéfinie de matière plastique fondue qui ne remplit que partiellement la cavité de moule, on amène l'aiguille vers la cavité de moule en bouchant l'injecteur à canal chauffant et à travers cette aiguille, on introduit dans la matière plastique déjà injectée un gaz, un liquide ou une autre matière plastique qui applique la matière plastique contre la paroi de ladite cavité, après quoi on ouvre brièvement l'injecteur à canal chauffant pour injecter encore une faible quantité de première matière plastique, qui bouche l'ouverture d'injection,
caractérisé en ce que l'aiguille, lorsqu'elle est amenée sur la cavité de moule, est enfoncée dans la matière plastique qui se trouve déjà dans celle-ci mais qui n'a pas encore durci, et après l'injection de la quantité de première matière plastique qui bouche l'ouverture d'injection, l'aiguille est finalement amenée dans une position zéro, de sorte qu'elle ferme la cavité de moule au ras de celle-ci.

2. Procédé selon la revendication 1, caractérisé en ce qu'une matière plastique de qualité inférieure, par exemple une matière plastique recyclée ou alvéolaire, est introduite dans la matière plastique déjà injectée.

3. Procédé selon la revendication 1, caractérisé en ce qu'un liquide à bas point d'ébullition est introduit dans la matière plastique injectée.

4. Procédé selon la revendication 1, caractérisé en ce que le gaz est évacué par l'intermédiaire de l'aiguille après le remplissage du moule.
